# EUROPEAN PATENT SPECIFICATION

(11) **EP 1 044 592 B1**
(45) Date of publication and mention of the grant of the patent: **16.06.2004**
(21) Application number: 00201085.8
(22) Date of filing: 24.03.2000
(51) Int. Cl.: A01C 23/00, A01C 23/02

(54) **DEVICE AND METHOD FOR MANURING LAND**
Verfahren und Vorrichtung zur Bodendüngung
Procéde et appareil pour fertiliser du sol

(30) Priority: 15.04.1999 NL 1011803
(43) Date of publication of application: 18.10.2000
(73) Proprietor: Veenhuis Machines B.V., NL-8102 HE Raalte (NL)
(72) Inventor: Veenhuis, Thedorus Josef Maria, 8102 HE Raalte (NL)
(74) Representative: Louet Feisser, Arnold

(56) References cited:
- EP-A- 0 520 974
- CH-A- 340 080

## Description

The invention relates to a device for manuring land, comprising a container for substantially liquid manure, a supply pipe for supplying the manure from the container to a distributor, and a plurality of discharge pipes for discharging the manure from the distributor to several outlet openings, said distributor comprising a housing which is bounded on one side by a flat wall in which holes are provided, to which the discharge pipes connect, in which housing a rotatable cutting element fitted with knives is present, which cutting element is capable of rotation in a plane parallel to the flat wall, so that the knives move past the holes.

A device of this kind is known from DE-A-4021266, wherein the disc-shaped cutting element is circumferentially provided with a plurality of recesses, whose edges form the knives which cut the solid elements in the manure into smaller pieces. A device of this kind is also known from EP-A-0 520 974.

The distributor functions in the first place to distribute the flow of manure evenly over the various outlet openings, so that the manure can be applied to the land in a number of swaths, whether or not in pre-formed grooves or trenches. The distributor furthermore functions to prevent the discharge pipes, which are thinner than the supply pipe, from getting clogged. That is the reason why the cutting element is provided, which is capable of reducing the large solid elements that may be present in the manure to smaller parts. When the cutting element wedges thereby, the direction of rotation of the cutting element is reversed, so that the cutting action is continued.

The object of the invention is to provide a device and a method for manuring land, wherein the distributor can be used more efficiently.

According to the invention, in order to accomplish that objective, the cutting element and the knives are provided with means for attaching each knife to the cutting element in at least two positions, so that more portions of the cutting edge of the knife can be used. This makes it possible to use the knives longer, and the cutting edge can usually be larger than is necessary for a cutting operation, since the knife is sufficiently large.

EP-A-0520974 discloses a manuring device according to the preamble of claim 1, comprising a distributor which is fitted with circular discs, which discs are freely rotatable, however, so that they rotate during rotation of the cutting element. In practice it has become apparent that this free rotatability results in irregular and uncontrolled wear on the knives. Contrary to the arrangement as disclosed in EP-A-0520974, the knives according to the invention are fixedly connected to the cutting element.

Preferably one or more of the knives can be removed and also be placed back again without having to remove the cutting element from the housing. When fewer knives are present in the distributor, the manure can flow through the distributor more easily, so that a larger amount of manure can be led to the discharge pipes. In practice, depending on the type of manure, the maximum number of knives is in many cases not required in order to obtain an adequate cutting action. In many cases it is possible, therefore, to reduce the resistance which the manure encounters in the distributor.

Preferably, more than eight, preferably more than ten knives are present, and two or more, preferably four knives are removable. In practice satisfactory results have been obtained therewith.

In one preferred embodiment, the removable knives are attached to the cutting element by means of bolts, preferably two bolts for each removable knife, on the side of the cutting element that faces away from the flat wall. After the distributor housing has been opened, the knives in question can easily be removed or be placed back.

Preferably, a knife substantially consists of a circular disc having a bevelled circumferential edge, so that a cutting edge is formed on the side of the flat wall. In that case said circular disc can be attached to the cutting element in two positions, turned through 180° relative to each other, or in more positions, turned through a smaller angle relative to each other.

The invention also relates to a distributor for distributing manure over a plurality of discharge pipes, comprising a housing which is bounded on one side by a flat wall, in which holes are formed to which the discharge pipes can connect, in which housing a rotatable cutting element fitted with knives is present, which is capable of rotation in a plane parallel to the flat wall, so that the knives move past said holes, wherein each knife can be attached to the cutting element in at least two positions, so that more portions of the cutting edge of the knife can be used. Preferably, the knives comprise substantially circular discs having a bevelled circumferential edge, so that a cutting edge is formed on the side of the flat wall.

The invention furthermore relates to a method for manuring land, wherein substantially liquid manure is supplied to a distributor from a container via supply pipe and discharged from said distributor to several outlet openings via a plurality of discharge pipes, wherein a cutting element fitted with knives rotates in said distributor, parallel to a flat wall thereof, in which flat wall holes are provided, to which the discharge pipes connect, wherein the knives move past said holes, wherein each knife can be attached to the cutting element in at least two positions, so that more portions of the cutting edge of the knife can be used.

In order to explain the invention more fully, an embodiment of a distributor for a device for manuring land will be described hereafter with reference to the drawing.
Figure 1 is a top plan view of a cutting element present in a distributor;
Figure 2 is a sectional view along line II-II in Figure 1; and
Figure 3 is a sectional view along line III-III in Figure 1.

The figures are merely schematic representations, wherein parts corresponding to each other are indicated by the same numerals.

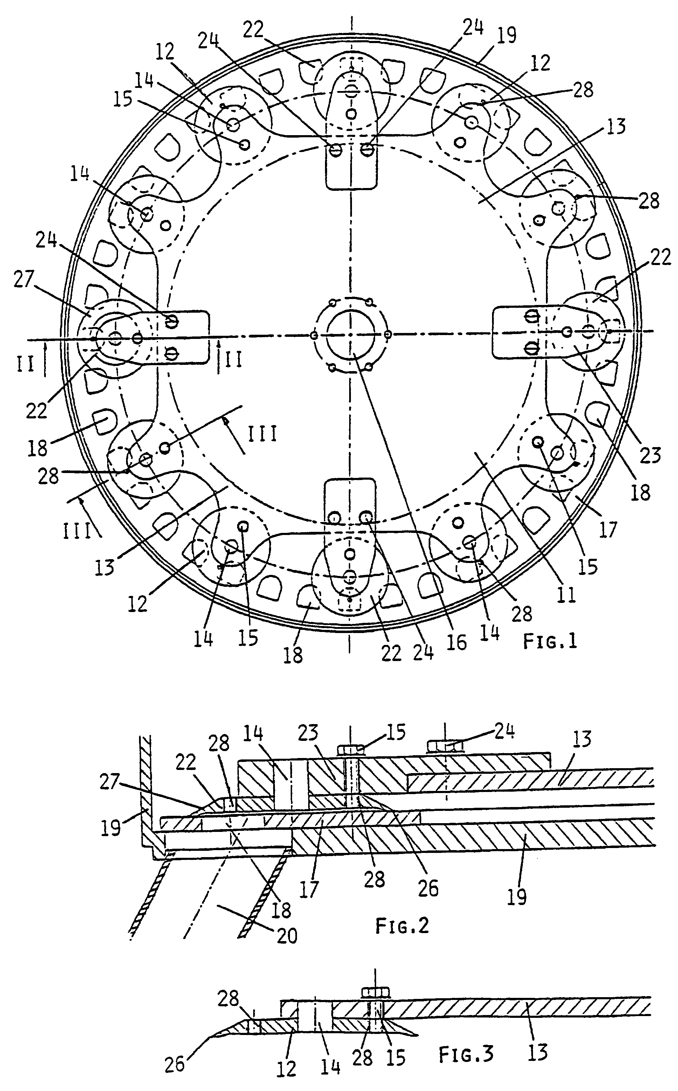

Figure 1 shows a cutting element 11 fitted with twelve disc-shaped knives 12, 22. Eight knives 12 are fixedly connected to a plate-shaped part 13 of the cutting element 11, and four knives 22 are removably connected thereto. Cutting element 11 is to that end fitted with twelve shafts 14, which extend through a hole which is centrally provided in knives 12, 22. Each knife 12, 22 is fixedly connected by means of a bolt 15.

Cutting element 11 is capable of rotation in a horizontal plane, to which end it is secured to a vertical shaft (not shown) in the central portion 16. As a result of this arrangement, the cutting element can rotate against a flat wall 17, which consists of a circular flat disc and which is provided with forty holes 18. The flat wall 17 is disposed in the housing 19 of a distributor.

The liquid manure is centrally supplied to the distributor at the upper side thereof, and it exits the distributor at the bottom side through holes 18, from where it is discharged, via discharge pipes 20, to the nozzles which apply the manure to the ground or in the ground.

Figure 2 shows in a sectional view how a removable knife 22 is attached to the cutting element. A connecting piece 23 is screwed down on plate-shaped part 13 by means of two bolts 24, to which connecting piece 23 shaft 14 is attached. Bolt 15 fixedly connects knife 22 and connecting piece 23 together.

Figure 2 furthermore shows part of the housing 19 of the distributor, to which discharge pipe 20 connects. Shaft 14 is thereby secured in position in plate-shaped part 13, which shaft 14 extends centrally through knife 12. Knife 12 is fixedly connected to plate-shaped part 13 by means of bolt 15.

Knives 12, 22 comprise a circular, disc-shaped part having a bevelled circumference, so that a cutting edge 26 is formed. In Figure 1 the bevelled circumferential edge 27 of the knife 22 positioned furthest to the left is shown in top plan view.

The total number of knives 12, 22 can be reduced as desired by removing one, two, three or all knives 22, thus increasing the through-flow of the distributor to a certain extent.

Each knife 12, 22 is provided with two bolt holes 28, so that knife 12, 22 can be attached in two positions, wherein a different part of the cutting edge is moved over holes 18 in each position. As a result of this arrangement the knives 12, 22, once they have become blunt in one position, can be used again in the other position.

The illustrated embodiment is to be considered a mere example, also other embodiments are possible.

## Claims

1. A device for manuring land, comprising a container for substantially liquid manure, a supply pipe for supplying the manure from the container to a distributor, and a plurality of discharge pipes (20) for discharging the manure from the distributor to several outlet openings, said distributor comprising a housing (19) which is bounded on one side by a flat wall (17) in which holes (18) are provided, to which the discharge pipes (20) connect, in which housing (19) a rotatable cutting element (11) fitted with knives (12,22) is present, which cutting element (11) is capable of rotation in a plane parallel to the flat wall (17), so that the knives (12,22) move past the holes (18), **characterized in that** the cutting element (11) and the knives (12,22) are provided with means (15, 28) for attaching each knife (12,22) to the cutting element (11) in at least two positions, so that more portions of the cutting edge (26) of the knife (12,22) can be used.

2. A device according to claim 1, **characterized in that** said means (15,28) consist of at least two bolt holes (28) provided in each knife (12,22) and a bolt (15) for fixedly connecting each knife (12,22) to the cutting element (11).

3. A device according to claim 1 or 2, **characterized in that** one or more knives (22) can be removed without having to remove the cutting element (11) from the housing (19).

4. A device according to claim 1, 2 or 3, **characterized in that** more than eight, preferably more than ten knives (12,22) are present, and **in that** two or more, preferably four knives (22) are removable.

5. A device according to any one of the preceding claims, **characterized in that** the removable knives (22) are attached to the cutting element (11) by means of bolts, preferably two bolts (24) for each removable knife (22), on the side of the cutting element (11) that faces away from the flat wall (17).

6. A device according to any one of the preceding claims, **characterized in that** a knife (12,22) substantially consists of a circular disc having a bevelled circumferential edge (27), so that a cutting edge (26) is formed on the side of the flat wall (17).

7. A device according to claim 6, **characterized in that** said circular disc (12,22) can be attached to the cutting element (11) in two positions, turned through 180° relative to each other, or in more positions, turned through a smaller angle relative to each other.

8. A distributor for distributing manure over a plurality of discharge pipes (20), comprising a housing (19) which is bounded on one side by a flat wall (17), in which holes (18) are formed to which the discharge pipes (20) can connect, in which housing (19) a rotatable cutting element (11) fitted with knives (12,22) is present, which is capable of rotation in a plane parallel to the flat wall (17), so that the knives (12,22) move past said holes (18), **characterized in that** the cutting element (11) and the knives (12,22) are provided with means (15, 28) for attaching each knife (12,22) to the cutting element (11) in at least two positions, so that more portions of the cutting edge (26) of the knife (12,22) can be used.

9. A method for manuring land, wherein substantially liquid manure is supplied to a distributor from a container via supply pipe and discharged from said distributor to several outlet openings via a plurality of discharge pipes (20), wherein a cutting element (11) fitted with knives (12,22) rotates in said distributor, parallel to a flat wall (17) thereof, in which flat wall (17) holes (18) are provided, to which the discharge pipes (20) connect, wherein the knives (12,22) move past said holes (18), and wherein each knife (12,22) can be attached to the cutting element (11) in at least two positions, **characterized in that** more portions of the cutting edge (26) of the knife (12,22) are used by turning the knife (12,22) from the first to the second position and fixing the knife to the cutting element (11).

## Patentansprüche

1. Vorrichtung zur Bodendüngung, mit einem Behälter für im wesentlichen flüssigen Dünger, einem Zuführungsrohr zum Zuführen des Düngers von dem Behälter zu einem Verteiler, und einer Anzahl von Abgaberohren (20) zum Abgeben des Düngers von dem Verteiler an mehrere Auslaßöffnungen, wobei der Verteiler ein Gehäuse (19) aufweist, das an einer Seite durch eine flache Wand (17) begrenzt ist, in der Löcher (18) angeordnet sind, an die sich die Abgaberohre (20) anschließen, wobei in dem Gehäuse (19) ein drehbares Schneidelement (11) angeordnet ist, das mit Messern (12, 22) versehen ist, wobei das Schneidelement (11) zu einer Drehung in einer zu der ebenen Wand (17) parallelen Ebene in der Lage ist, so daß sich die Messer (12, 22) an den Löchern (18) vorbeibewegen, **dadurch gekennzeichnet, daß** das Schneidelement (11) und die Messer (12, 22) mit Mitteln (15, 28) versehen sind, um jedes Messer (12, 22) an dem Schneidelement (11) in zumindest zwei Positionen zu befestigen, so daß mehrere Abschnitte der Schneidkante (26) des Messer (12, 22) genutzt werden können.

2. Vorrichtung nach Anspruch 1, **dadurch gekennzeichnet, daß** das Mittel (15, 28) aus zumindest zwei Bolzenlöchern (28) besteht, die in jedem Messer (12, 22) angeordnet sind, und aus einem Bolzen (15) um jedes Messer (12, 22) fest mit dem Schneidelement (11) zu verbinden.

3. Vorrichtung nach Anspruch 1 oder 2, **dadurch gekennzeichnet, daß** eines oder mehrere der Messer (22) abgenommen werden Können, ohne daß es notwendig ist, das Schneidelement (11) aus dem Gehäuse (19) herauszunehmen.

4. Vorrichtung nach Anspruch 1, 2 oder 3, **dadurch gekennzeichnet**, das mehr als acht, vorzugsweise mehr als zehn Messer (12, 22) vorhanden sind, und daß zwei oder mehr, vorzugsweise vier Messer (22) abnehmbar sind.

5. Vorrichtung nach einem der vorangehenden Ansprüche, **dadurch gekennzeichnet, daß** die abnehmbaren Messer (22) an dem Schneidelement (11) mit Hilfe von Bolzen befestigt sind, vorzugsweise mit zwei Bolzen (24) für jedes abnehmbare Messer (22), auf der Seite des Schneidelements (11), das von der ebenen Wand (17) wegweist.

6. Vorrichtung nach einem der vorangehenden Ansprüche, **dadurch gekennzeichnet, daß** ein Messer (12, 22) im wesentlichen aus einer kreisförmigen Scheibe besteht, die eine abgeschrägte, über den Umfang verlaufende Kante (27) aufweist, so daß eine Schneidkante (26) auf der Seite der ebenen Wand (17) gebildet ist.

7. Vorrichtung nach Anspruch 6, **dadurch gekennzeichnet, daß** die kreisförmige Scheibe (12, 22) an dem Schneidelement (11) in zwei Positionen befestigt werden kann, die um 180° relativ zueinander versetzt sind, oder in mehreren Positionen, die um einen kleineren Winkel relativ zueinander versetzt sind.

8. Verteiler zum Verteilen von Dünger auf eine Anzahl von Abgaberohren (20), mit einem Gehäuse (19), das auf einer Seite durch eine ebene Wand (17) begrenzt ist, in der Löcher (18) ausgebildet sind, an die sich die Abgaberohre (20) anschließen können, wobei in dem Gehäuse (19) ein drehbares Schneidelement (11), das mit Messern (12, 22) versehen ist, angeordnet ist, das zur Drehung in einer zu der ebenen Wand (17) parallelen Ebene in der Lage ist, so daß sich die Messer (12, 22) an den Löchern (18) vorbeibewegen, **dadurch gekennzeichnet, daß** das Schneidelement (11) und die Messer (12, 22) mit Mitteln (15, 28) zum Befestigen jedes Messers (12, 22) an dem Schneidelement (11) in zumindest zwei Positionen versehen sind, so daß mehrerer Abschnitte der Schneidkante (26) des Messers (12, 22) genutzt werden können.

9. Verfahren zur Bodendüngung, bei dem ein im wesentlichen flüssiger Dünger zu einem Verteiler aus einem Behälter über ein Zuführungsrohr zugeführt wird und aus dem Verteiler an mehrere Auslaßöffnungen über eine Anzahl von Abgaberohren (20) abgegeben wird, wobei ein Schneidelement (11), das mit Messern (12, 22) versehen ist, in dem Verteiler rotiert, parallel zu einer ebenen Wand (17) davon; wobei in der ebenen Wand (17) Löcher (18) vorgesehen sind, an die sich die Abgabeleitungen (20) anschließen, wobei sich die Messer (12, 22) an den Löchern (18) vorbeibewegen, und wobei jedes Messer (12, 22) an dem Schneidelement (11) in zumindest zwei Positionen befestigt werden kann, **dadurch gekennzeichnet, daß** mehrere Abschnitte der Schneidkante (28) des Messers (12, 22) genutzt werden, indem das Messer (12, 22) aus der ersten in die zweite Position gedreht wird und das Messer an dem Schneidelement (11) fixiert wird.

## Revendications

1. Appareil pour fumer la terre, comprenant un récipient de purin pratiquement liquide, une conduite d'alimentation destinée à transmettre le purin du récipient à un distributeur, et plusieurs conduites (20) d'évacuation du purin du distributeur vers plusieurs ouvertures de sortie, le distributeur comprenant un boîtier (19) qui est délimité d'un premier côté par une paroi plate (17) dans laquelle sont disposés des trous (18) auxquels les conduites (20) d'évacuation sont raccordées, un élément rotatif (11) de coupe muni de couteaux (12, 22) étant présent dans le boîtier (19), l'élément de coupe (11) pouvant tourner dans un plan parallèle à la paroi plate (17), si bien que les couteaux (12, 22) se déplacent devant les trous (18), **caractérisé en ce que** l'élément de coupe (11) et les couteaux (12, 22) ont des dispositifs (15, 28) de fixation de chaque couteau (12, 22) à l'élément de coupe (11) à deux positions au moins, si bien que plusieurs parties du bord de coupe (26) du couteau (12, 22) peuvent être utilisées.

2. Appareil selon la revendication 1, **caractérisé en ce que** lesdits dispositifs (15, 28) sont constitués d'au moins deux trous (28) de passage de boulons formés dans chaque couteau (12, 22) et d'un boulon (15) destiné à raccorder en position fixe chaque couteau (12, 22) à l'élément de coupe (11).

3. Appareil selon la revendication 1 ou 2, **caractérisé en ce qu'**un ou plusieurs couteaux (22) peuvent être retirés sans qu'il soit nécessaire de retirer l'élément de coupe (11) du boîtier (19).

4. Appareil selon la revendication 1, 2 ou 3, **caractérisé en ce que** plus de huit et de préférence plus de dix couteaux (12, 22) sont présents, et **en ce qu'**au moins deux et de préférence quatre couteaux (22) sont amovibles.

5. Appareil selon l'une quelconque des revendications précédentes, **caractérisé en ce que** les couteaux amovibles (22) sont fixés à l'élément de coupe (11) par des boulons, de préférence deux boulons (24) pour chaque couteau amovible (22), du côté de l'élément de coupe (11) qui est opposé à la paroi plate (17).

6. Appareil selon l'une quelconque des revendications précédentes, **caractérisé en ce qu'**un couteau (12, 22) est constitué pratiquement d'un disque circulaire ayant un bord circonférentiel chanfreiné (27), si bien qu'un bord de coupe (26) est formé du côté de la paroi plate (17).

7. Appareil selon la revendication 6, **caractérisé en ce que** le disque circulaire (12, 22) peut être fixé à l'élément de coupe (11) à deux positions, tournées de 180° l'une par rapport à l'autre, ou plus de deux positions, tournées d'un plus petit angle les unes par rapport aux autres.

8. Distributeur destiné à distribuer du purin par plusieurs conduites d'évacuation (20), comprenant un boîtier (19) qui est délimité d'un côté par une paroi plate (17), dans laquelle des trous (18) sont formés et permettent le raccordement des conduites d'évacuation (20), un élément de coupe (11) muni de couteaux (12, 22) étant présent dans le boîtier (19) et pouvant tourner dans un plan parallèle à la paroi plate (17), si bien que les couteaux (12, 22) se déplacent devant les trous (18), **caractérisé en ce que** l'élément de coupe (11) et les couteaux (12, 22) ont des dispositifs (15, 28) de fixation de chaque couteau (12, 22) à l'élément de coupe (11) à deux positions au moins, si bien que plusieurs parties du bord de coupe (26) du couteau (12, 22) peuvent être utilisées.

9. Procédé de fumage de terre, dans lequel du purin pratiquement liquide est transmis à un distributeur à partir d'un récipient par l'intermédiaire d'une conduite d'alimentation et est évacué du distributeur vers plusieurs ouvertures de sortie par l'intermédiaire de plusieurs conduites d'évacuation (20), dans lequel un élément de coupe (11) muni de couteaux (12, 22) tourne dans le distributeur parallèlement à une paroi plate (17) de celui-ci, des trous (18) étant disposés dans cette paroi plate (17) et permettant le raccordement des conduites d'évacuation (20), les couteaux (12, 22) se déplaçant devant les trous (18), et dans lequel chaque couteau (12, 22) peut être fixé à l'élément de coupe (11) à deux positions au moins, **caractérisé en ce que** plusieurs parties du bord de coupe (26) du couteau (12, 22) sont utilisées par rotation du couteau (12, 22) de la première position à la seconde et par fixation du couteau à l'élément de coupe (11).
